# EUROPEAN PATENT SPECIFICATION

(11) **EP 3 229 352 B1**
(45) Date of publication and mention of the grant of the patent: **18.03.2020**
(21) Application number: 14907552.5
(22) Date of filing: 01.12.2014
(51) Int. Cl.: H02K 13/00, H01R 39/12, H01R 39/16, H02K 7/10, H02K 11/40, B60R 16/03

(54) **ROTOR OF ROTATING ELECTRIC MACHINE AND ROTATING ELECTRIC MACHINE**
ROTOR FÜR EINE ELEKTRISCHE DREHMASCHINE UND ELEKTRISCHE DREHMASCHINE
ROTOR DE MACHINE ÉLECTRIQUE TOURNANTE, ET MACHINE ÉLECTRIQUE TOURNANTE

(43) Date of publication of application: 11.10.2017
(73) Proprietor: Mitsubishi Electric Corporation, Chiyoda-ku Tokyo 100-8310 (JP)
(72) Inventor: SHIRAI, Keisuke, Tokyo 100-8310 (JP); MURATA, Tomoaki, Tokyo 100-8310 (JP); OHASHI, Atsushi, Tokyo 100-8310 (JP); IKEDA, Hiroki, Tokyo 100-8310 (JP)
(74) Representative: Hoffmann Eitle
(86) International application number: PCT/JP2014/081686
(87) International publication number: WO 2016/088158

(56) References cited:
- DE-A1- 2 843 007
- DE-A1-102004 040 590
- DE-A1-102004 040 590
- DE-A1-102005 031 535
- FR-A1- 2 807 889
- FR-A1- 2 928 042
- JP-A- S5 232 508
- JP-A- 2002 238 225
- JP-U- S 583 769
- US-A- 4 992 691

## Description

### TECHNICAL FIELD

The present invention relates to a rotor of a rotating electric machine in which a slip ring device is press-fitted to a shaft, and in particular, a rotor of a rotating electric machine such as a vehicle AC generator used for a vehicle.

### BACKGROUND ART

In one example of conventionally known rotors of vehicle AC generators, a slip ring device is attached to a shaft, and power is supplied to a coil of the rotor via the slip ring device.

The slip ring device is composed of a pair of slip rings, a connection terminal electrically connecting the slip rings and the rotor coil, and a resin molded portion obtained by molding the slip rings and the connection terminal with resin to integrally hold them. On the other hand, the shaft is rotatably supported by a housing via a pair of bearings. A pulley connected to an engine via a belt is attached to the shaft. Thus, a drive force from the engine is transferred to a pulley, whereby the rotor is rotated.

In such a conventional rotor of a vehicle AC generator, it is known that, while a drive force is transferred from the engine, the pulley and the shaft are charged with static electricity caused by friction between the belt and the pulley, whereby undesirable static electricity discharge is caused. In addition, the bearings which have direct contact with the shaft are also charged. In such a case, the outer ring, the rolling elements, and the inner ring of the bearing all of which are normally metallic are insulated from each other by presence of lubricant, but when the charging progresses so that voltage of the bearing relative to a housing as the earth reaches the dielectric breakdown voltage of the lubricant, current (bearing current) flows through the bearing itself, thus causing a problem that the bearing is likely to be electrically corroded.

In order to solve a problem that electric charge separation occurs to cause undesirable static electricity discharge because of use of a drive belt made from a new material, Patent Document 1 discloses avoiding the charging by bringing the minus-side slip ring and the shaft into direct contact with each other.

### CITATION LIST

### PATENT DOCUMENT

Patent Document 1: German Patent Publication No. 102004040590(A1)
Patent Document 2: FR 2 928 042 A1
Patent Document 3: FR 2 807 889 A1

### SUMMARY OF THE INVENTION

### PROBLEMS TO BE SOLVED BY THE INVENTION

Patent document 2 relates to a collector that has prefabricated slip rings made of copper and separated from one another by an annular axial space. An electrical connection element is provided in electrical contact with the ring and extended through the ring. A parallel piped insert is made of electrically insulating material i.e. plastic material, and has a slip ring positioning portion that is extended over only a part of a circumference of the space separating the rings. The insert has a spacing portion extended axially between the ring and the element.

Patent document 3 relates to a car alternator that has a rotor with a magnetic part and an inductor coil with electrical connections. The potential voltage of the magnetic section is passed to the coil inductor by the connections.

However, the rotor of a vehicle AC generator shown in Patent Document 1 has many problems.

First, in FIG. 2 to FIG. 4 of Patent Document 1, the minus-side slip ring is attached by press-fit adjacently to the axial-direction side surface (axial end surface) of a resin holding body at the end of a small-diameter part of the shaft. However, in general, rotors of a vehicle AC generator are required to withstand rotation at up to 20000 rpm, and therefore there is a reliability problem that, for example, scattering of the slip ring can occur. Normally, the shaft is made from iron, and the slip ring is made from copper, and it is highly likely that, due to difference in the metals, the slip ring rotates relative to the shaft to hamper the function of the rotor. Therefore, in order to obtain a configuration to "prevent rotation of the slip ring", the inner diameter of the minus-side slip ring and the outer diameter of the small-diameter part of the shaft need to have high dimension accuracy, high circularity, and high concentricity, and fixation means for both members are needed. Thus, the number of manufacturing steps increases, resulting in increase in the cost of the rotor.

Patent Document 1 indicates an advantage that the number of shaft grooves for accommodating connection conductors extending in the axial direction can be decreased from two locations to one location around the shaft, whereby the working cost can be reduced. However, the degree of imbalance is great for such a rotating body as described above, and therefore, for example, noise increases due to influence on the bearing by undulation and due to variation in the gap (radial-direction distance) between the outer circumference of a rotor core and the inner circumference of a ring-shaped stator core.

In FIG. 5 and FIG. 5a of Patent Document 1, a holding disk having a cylindrical shape is connected to the inner side of the minus-side slip ring by soldering, welding, or the like, these are inserted into an injection mold, and resin is injected to obtain a resin holding body. However, in this case, it is necessary to hold the outer circumference of the slip ring by the mold with only the inner circumferential surface of the holding disk exposed. Thus, adjustment of a molding machine is very difficult and the mass productivity is low. In addition, it is not ensured that the slip ring having a cylindrical shape and the holding disk having a cylindrical shape can be manufactured with high concentricity, and if, after the resin molding, the inner circumferential surface needs to be worked to ensure the contact accuracy in shaft insertion, the number of manufacturing steps increases and the cost increases. In addition, at the time of press-fitting to the shaft, there are many difficulties in performing manufacturing so as not to cause chipping, cracking, or the like in a resin part of the resin body and so as to ensure electric contact between the shaft and the inner circumferential surface of the embedded holding disk.

Further, in FIG. 6 and FIG. 6a of Patent Document 1, two slip ring devices are shown: one is configured such that the holding disk alone is fitted to the shaft with an axial pin portion pressed to the axial end surface of the resin holding body, and the outer circumferential surface of the holding disk is brought into contact with the inner side of the minus-side slip ring; and the other one is configured such that a holding disk having an axial pin is formed integrally with the resin holding body.

In the case where the resin holding body is fitted to the shaft and thereafter the holding disk having an axial pin is alone fitted thereto, it is impossible to ensure both the mechanical fitting strength and the electric contact state unless a stop hole of the shaft, a holding disk part, and the minus-side slip ring are concentric.

Therefore, not only the fitting dimension is required to have high accuracy, but also, since the weight of the holding disk portion is great as compared to the minus-side slip ring fitted to the shaft, scattering or rotation of the axial pin is likely to occur, and therefore a configuration for preventing the rotation and an additional process step are needed.

In the case where an exposed part of the axial pin formed as a molded body is fitted to the stop hole of the shaft, a fixation structure using a screw cannot be adopted because of the structure integrated with a connection conductor extending in the axial direction. Therefore, also in this case, accuracy is required for the fitting between both cylindrical bodies.

In FIG. 7 of Patent Document 1, in order to bring an end of a plate-like connection conductor into contact with the shaft, it is necessary to hold, in an injection mold, the end of the connection conductor so as to be exposed. However, the exposed surface is only a circumferential-direction surface, and therefore it is difficult to hold the connection conductor and reliable exposure cannot be expected. That is, the other end of the connection conductor in the mold is pressed by the pressure of injected resin and thus cannot keep a stable position. Therefore, it is impossible to ensure electric contact between the connection conductor and the shaft unless a holding portion is additionally provided in advance and a shaft press-fit surface is worked after a resin molded body is formed. Such a configuration is not realistic for mass production.

The present invention has been made to solve the above problems, and an object of the present invention is to obtain a rotor of a rotating electric machine, that prevents electric corrosion of a bearing supporting the rotor and prevents decrease in the life of the bearing and further the rotor, without reducing the reliability and the productivity as the rotating body.

### SOLUTION TO THE PROBLEMS

A rotor of a rotating electric machine according to the present invention includes: a shaft rotatable about an axis; a rotor body having a rotor coil and fixed to the shaft; a pulley which is attached to one end of the shaft and to which a drive force from an engine is transferred; and a slip ring device including a pair of slip rings, a pair of connection conductors electrically connecting the respective slip rings and the rotor coil, and an insulation molded body attached to another end of the shaft and holding the slip rings and the connection conductors. In the insulation molded body, the pair of slip rings and the pair of connection conductors are embedded and held such that brush sliding surfaces of the slip rings and lead-out-wire-connection end portions of the connection conductors are exposed in an outer circumferential direction. At least one of the negative-side slip ring and the negative-side connection conductor embedded and held in the insulation molded body has a protrusion extending toward the shaft and electrically connected to the shaft.

In another rotor of a rotating electric machine according to the present invention, in the insulation molded body, the pair of slip rings and the pair of connection conductors are embedded and held such that brush sliding surfaces of the slip rings and lead-out-wire-connection end portions of the connection conductors are exposed in an outer circumferential direction. The insulation molded body has a recess formed at an axial end thereof. At the recess, at least one of the negative-side slip ring and the negative-side connection conductor is connected to the shaft by soldering.

### EFFECT OF THE INVENTION

In the rotors of a rotating electric machine according to the present invention, since the inner-circumferential-side protrusion of the negative-side slip ring or the negative-side connection conductor can be electrically connected to the shaft, it is possible to reliably avoid trouble of electric corrosion of the bearings with use of an inexpensive configuration, without causing trouble such as scattering of components due to rotation.

### BRIEF DESCRIPTION OF THE DRAWINGS

[FIG. 1] FIG. 1 is a sectional view showing the entire structure of a rotor of a rotating electric machine according to embodiment 1 of the present invention.
[FIG. 2] FIG. 2 is a perspective view showing a major part configuration of the rotor in FIG. 1.
[FIG. 3] FIG. 3 is a perspective view showing the rotor when a bearing is detached in FIG. 2.
[FIG. 4] FIG. 4 is a front view showing a slip ring device as seen from the axial direction in FIG. 3.
[FIG. 5] FIG. 5 is a sectional view along A-A line in FIG. 4.
[FIG. 6] FIG. 6 is a side view and a front view showing a major part of a brush-side shaft portion according to embodiment 1.
[FIG. 7] FIG. 7 is a perspective cutaway view along the axial direction, of the slip ring device according to embodiment 1.
[FIG. 8] FIG. 8 is a front view showing another example of the slip ring device.
[FIG. 9] FIG. 9 is a front view showing a major part configuration of a slip ring device according to embodiment 2.
[FIG. 10] FIG. 10 is a sectional view along B-B line in FIG. 9.
[FIG. 11] FIG. 11 is a sectional view and a front view showing the slip ring device alone in FIG. 10.
[FIG. 12] FIG. 12 is a partial sectional view showing a major part of the slip ring device according to embodiment 2.
[FIG. 13] FIG. 13 is a side view showing a brush-side shaft portion in FIG. 10.
[FIG. 14] FIG. 14 is a front view showing a slip ring device according to embodiment 3.
[FIG. 15] FIG. 15 is a sectional view along C-C line in FIG. 14.
[FIG. 16] FIG. 16 is a front view showing another example of the slip ring device according to embodiment 3.
[FIG. 17] FIG. 17 is a sectional view along D-D line in FIG. 16.
[FIG. 18] FIG. 18 is a front view showing a major part of a slip ring device according to embodiment 4.
[FIG. 19] FIG. 19 is a sectional view along E-E line in FIG. 18.

### DESCRIPTION OF EMBODIMENTS

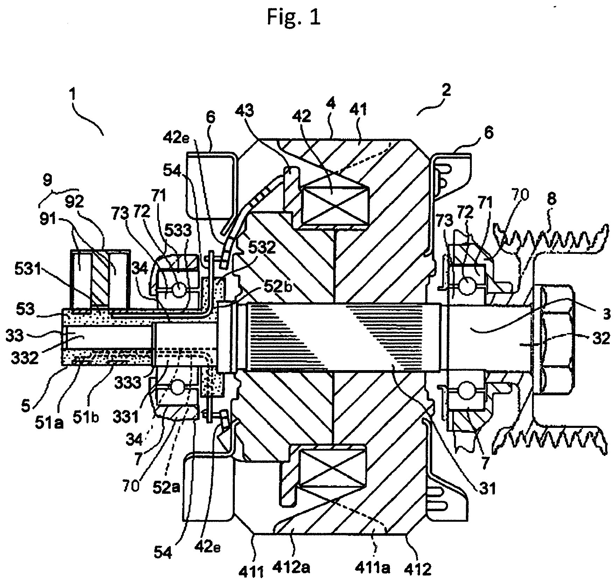

Hereinafter, the present invention will be described with reference to FIG. 1 to FIG. 7 showing an embodiment.

### Embodiment 1

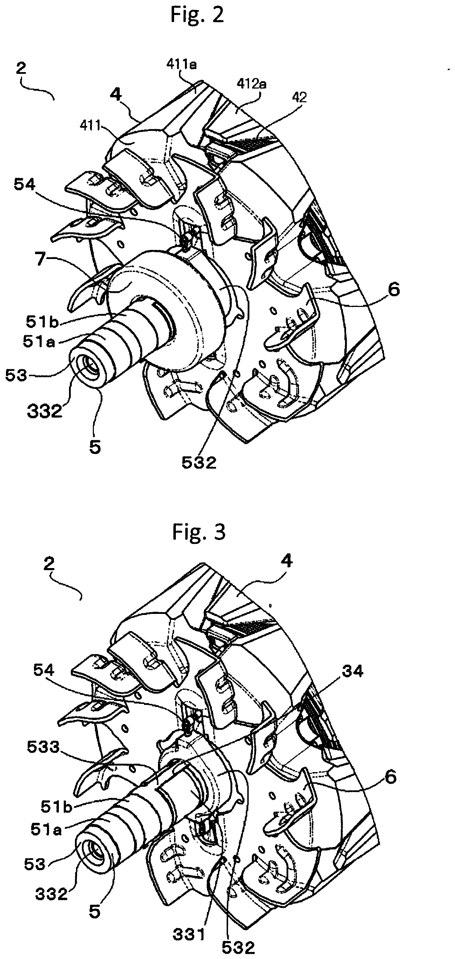

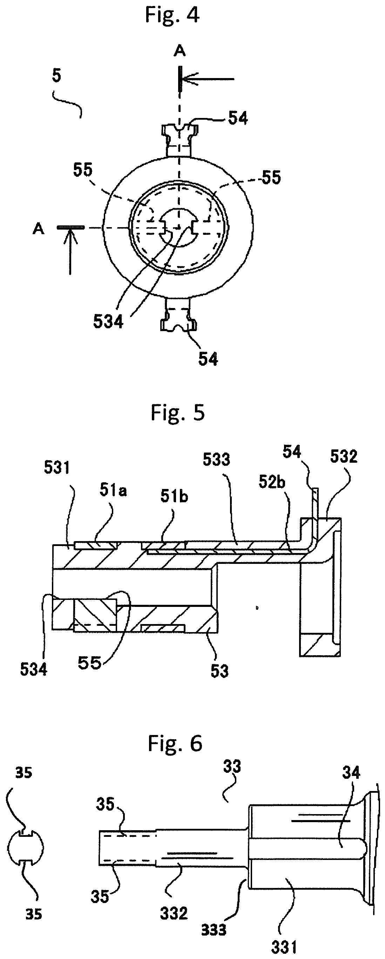

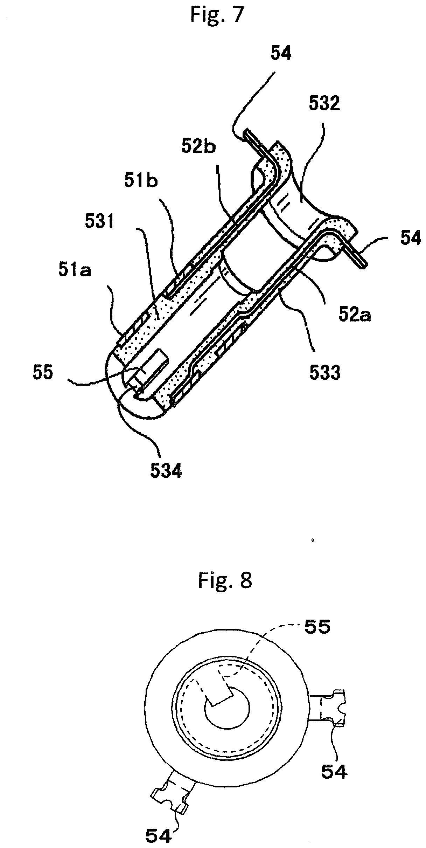

FIG. 1 is a sectional view showing the entire configuration of a rotor of a rotating electric machine according to embodiment 1 of the present invention. FIG. 2 and FIG. 3 are perspective views showing a major part configuration in FIG. 1. FIG. 4 is a front view of a slip ring device as seen from the axial direction in FIG. 3. FIG. 5 is a sectional view along A-A line in FIG. 4. FIG. 6 is a side view and a front view showing a major part of a brush-side shaft portion to be inserted into the slip ring device according to embodiment 1. FIG. 7 is a perspective cutaway view along the axial direction, of the slip ring device according to embodiment 1.

In the drawings, a rotating electric machine 1 includes a ring-shaped stator (not shown), and a rotor 2 located inside the stator and rotatable relative to the stator. The stator and the rotor 2 are supported by a housing (not shown). The stator includes a ring-shaped stator core (not shown) fixed to the housing, and a plurality of stator coils (not shown) provided to the stator core. Here, a vehicle AC generator mounted on a vehicle is shown as an example of the rotating electric machine 1.

The rotor 2 includes: a shaft 3 attached rotatably about the axis; a rotor body 4 fixed to a middle part of the shaft 3; a slip ring device 5 attached to a part, of the shaft 3, that protrudes from the rotor body 4; and a pair of fans 6 provided at both ends in the axial direction of the rotor body 4. The rotor 2 as described above is driven rotationally about the axis of the shaft 3 while being opposed to the stator.

The shaft 3 is rotatably supported via a pair of bearings 7 by bearing support portions 70 of the housing. The shaft 3 includes: a shaft body portion 31 to which the rotor body 4 is fixed; a pulley-side shaft portion 32 protruding from one end of the shaft body portion 31; and a brush-side shaft portion 33 protruding from the other end of the shaft body portion 31. The slip ring device 5 is attached to the brush-side shaft portion 33.

A pulley 8 connected to an engine (not shown) via a belt (not shown) is attached to the pulley-side shaft portion 32, and a drive force from the engine is transferred to the pulley 8, whereby the shaft 3 is rotationally driven.

The brush-side shaft portion 33 includes: a first shaft portion (groove-formed shaft portion) 331 protruding in the axial direction from the end surface of the shaft body portion 31; and a second shaft portion 332 further protruding from the end surface of the first shaft portion 331. The outer diameter of the second shaft portion 332 is smaller than the outer diameter of the first shaft portion 331. As a result, at the boundary between the first shaft portion 331 and the second shaft portion 332, a step portion 333 is formed along the circumferential direction of the shaft 3.

In the outer circumferential surface of the first shaft portion 331, a pair of shaft grooves 34 are provided along the axial direction of the shaft 3 and separated from each other in the circumferential direction of the shaft 3. Each shaft groove 34 extends from the position of the end surface of the shaft body portion 31 to the boundary (step portion 333) between the first shaft portion 331 and the second shaft portion 332, and opens at the end surface of the first shaft portion 331 (see FIG. 6).

The rotor body 4 includes: a rotor core (field core) 41 fixed to the shaft body portion 31; a rotor coil (field coil) 42 provided to the rotor core 41; and a bobbin 43 made of resin and interposed between the rotor core 41 and the rotor coil 42 to electrically insulate the rotor coil 42 against the rotor core 41.

The rotor core 41 includes: a first core portion 411 having a plurality of first claw-shaped magnetic pole portions 411a; and a second core portion 412 having a plurality of second claw-shaped magnetic pole portions 412a. The first and second core portions 411 and 412 are fixed to the shaft body portion 31 with the first and second claw-shaped magnetic pole portions 411a and 412a alternately engaged with each other along the circumferential direction of the rotor core 41. Thus, the rotor 2 is a so-called LUNDELL-type rotor.

The rotor coil 42 is arranged in a space formed in the rotor core 41. Two lead-out wires 42e of the rotor coil 42 are led out of the rotor core 41 from a space between the first claw-shaped magnetic pole portions 411a adjacent to each other. The rotor coil 42 is impregnated with resin (e.g., epoxy resin), and the resin coats the outermost periphery of the rotor coil 42 and fills the gap between the element wires constituting the rotor coil 42 and the gap between the rotor coil 42 and the bobbin 43, thereby enhancing the electric insulation performance and the mechanical strength of the rotor coil 42 with respect to the rotor core 41.

The slip ring device 5 is composed of: a pair of slip rings 51a and 51b made of metal (in this example, copper); a pair of connection conductors 52a and 52b for electrically connecting the respective slip rings 51a and 51b with the rotor coil 42; and an insulation molded body 53 attached to the brush-side shaft portion 33 and supporting the slip rings 51a and 51b and the connection conductors 52a and 52b.

One bearing 7 of the pair of bearings 7 supporting the shaft 3 is press-fitted from the outer side at the end of the brush-side shaft portion 33, to be fitted to the outer circumferential surface of the first shaft portion 331.

The insulation molded body 53 is formed from a resin having an electric insulation property. The insulation molded body 53 is formed by arranging the slip rings 51a and 51b and the connection conductors 52a and 52b in a mold and then injecting and curing the resin. The insulation molded body 53 includes: a molded body main part 531 having a cylindrical shape and fitted to the second shaft portion 332; an opposing portion 532 located closer to the rotor body 4 than the molded body main part 531; and a pair of connection portions 533 connecting the molded body main part 531 and the opposing portion 532 and accommodated in the respective shaft grooves 34.

The slip rings 51a and 51b are arranged around the outer circumference of the molded body main part 531 so as to surround the molded body main part 531, and embedded in the molded body main part 531 with their ring outer circumferential surfaces exposed to the outside. The slip rings 51a and 51b are provided to the molded body main part 531 so as to be separated from each other in the axial direction of the shaft 3. The connection conductors 52a and 52b extend from the respective slip rings 51a and 51b through the inside of the molded body main part 531, the insides of the connection portions 533, and then the inside of the opposing portion 532, to be led out from the outer circumferential surface of the opposing portion 532, to form exposed ends 54. The exposed ends 54 are respectively connected to the two lead-out wires 42e of the rotor coil 42, whereby the rotor coil 42 is electrically connected to the respective slip rings 51a and 51b.

The opposing portion 532 of the molded body main part 531 is formed in a ring shape surrounding the shaft 3 and supports the exposed ends 54. The opposing portion 532 is located between the rotor body 4 and the bearing 7 fitted to the first shaft portion 331.

The connection portions 533 extend from an end surface of the molded body main part 531 through the shaft grooves 34, to be connected to the inner circumferential surface of the opposing portion 532. Thus, the connection conductors 52a and 52b can be passed on the inner side of the bearing 7 fitted to the outer circumferential surface of the first shaft portion 331, and therefore it becomes possible to reduce the dimension in the radial direction of the slip ring device 5.

Next, the detailed description will be given with reference to FIG. 6 showing the brush-side shaft portion 33 and FIG. 5 and FIG. 7 showing the slip ring device 5.

Of the pair of slip rings, the negative-side slip ring 51a has a protrusion 55 extending toward the axial center from the inner circumferential surface of the molded body main part 531 so as to be exposed from the molded body main part 531. The second shaft portion 332 has recesses 35 corresponding to the protrusions 55. The exposed surfaces of the protrusions 55 and the bottom surfaces and side surfaces of the recesses 35 are formed to be flat surfaces, so that the protrusions 55 have contact with the brush-side shaft portion 33 when the slip ring device 5 is fitted to the brush-side shaft portion 33, whereby the shaft 3 is electrically connected to the slip ring device 5.

Here, as shown in FIG. 7, each protrusion 55 is exposed with a step from the inner circumferential surface of the molded body main part 531, and therefore can be securely held in the mold in which resin is injected, whereby the product accuracy can be ensured. In addition, a protrusion 534 similarly extending from the molded body main part 531 is provided adjacently to the axial end of each protrusion 55, whereby the protrusion 55 can be protected from minor collision with components at the time of fitting.

A brush device 9 (FIG. 1) is attached to the housing supporting the rotor 2. The brush device 9 includes: a pair of brushes 91 in contact with the respective slip rings 51a and 51b; a brush holder 92 holding the brushes 91; and a spring (not shown) energizing each brush 91 in a direction to contact with the respective slip rings 51a and 51b. When the rotor 2 is rotationally driven, the slip rings 51a and 51b slide on the brushes 91. One, of the brushes 91, that has contact with the negative-side slip ring 51a is electrically connected to the housing and thereby maintained in an earthed state.

In the rotating electric machine 1 as described above, current is supplied from a battery (not shown) through the brushes 91 and the slip ring device 5 to the rotor coil 42 of the rotor 2, and magnetic poles (N pole and S pole) are formed at the first and second claw-shaped magnetic pole portions 411a and 412a. The rotor 2 receives a drive force from the engine via the pulley 8, and thereby is rotated about the shaft 3. Thus, a rotating magnetic field is given from the rotor 2 to the stator core and an electromotive force is generated in the stator coil.

Here, as in the conventional device, along with rotation of the rotor 2, static electricity occurs between the belt (not shown) and the pulley 8, whereby the shaft 3 and the pair of bearings 7 are charged. However, in the present embodiment 1, since the negative-side slip ring 51a and the shaft 3 are in electric contact with each other, the energy can be discharged through the negative-side slip ring 51a and brush 91 before the electric charge is accumulated to such an extent as to discharge to the bearing support portion 70 through the bearing 7. That is, it is possible to prevent current from flowing through an inner ring 73, a rolling element 72, and an outer ring 71 of the bearing 7 and the bearing support portion 70, and thereby prevent trouble of causing electric corrosion.

The protrusion 55 to be fitted to each recess 35 of the second shaft portion 332 is formed continuously from the negative-side slip ring 51a and embedded and held in the insulation molded body 53 integrally with the negative-side slip ring 51a. Therefore, even when the rotor 2 is continuously rotating, the protrusion 55 can be kept in contact with the shaft 3.

In addition, since the contact surfaces of the shaft 3 and the protrusion 55 of the negative-side slip ring 51a are formed to be flat, there is an advantage that the accuracy can be easily enhanced and the contact state can be easily ensured, as compared to the case where circumferential surfaces are in contact with each other.

As shown in FIG. 4, since the two protrusions 55 and the two connection conductor exposed ends 54 are arranged separately in the circumferential direction, the balance is excellent as a rotating body and thus trouble due to biasing of the center of gravity can be avoided. Although the connection conductors are provided at two locations in terms of circuit configuration, the protrusions 55 may not necessarily be provided at two locations, considering the shape and the size that allow a desired charge avoiding effect to be obtained. As a matter of course, the protrusions 55 may be provided at three or more locations, depending on circumstances.

In the case where the protrusions 55 and the connection conductor exposed ends 54 are arranged with the center of gravity balanced, the arrangement order of these parts is not limited, and as shown in FIG. 8, for example, it is conceivable that the protrusion 55 and the two connection conductor exposed ends 54 are arranged in the circumferential direction so as to be separated from each other by 120 degrees. The weight balance in this case also depends on the shape, and therefore these parts are not necessarily arranged at equal pitches.

That is, as long as a desired effect or an excellent balance as a rotating body is obtained, the number of these parts and their positions in the circumferential direction may be set in any manner other than the above manner. In the above example, the protrusions 55 have a rectangular shape, but other shapes suited for fitting may be selected as appropriate.

In general, as a vehicle AC generator, a waterproof structure such as a labyrinth structure, packing, or an O-ring (they are not shown) are provided around the slip ring device 5, thereby preventing trouble due to exposure to water or salt water or the like upon mounting on a vehicle. Also for a configuration for avoiding the above charging by this waterproof structure, a risk of promoting corrosion of an electric path can be avoided.

### Embodiment 2

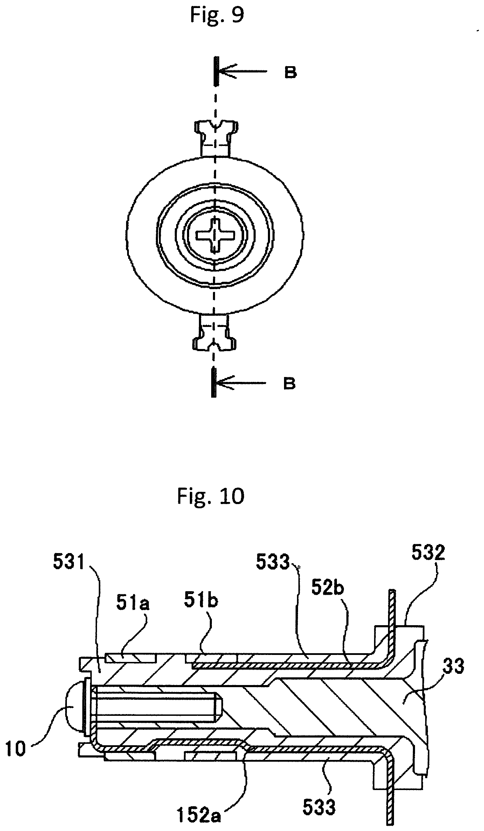

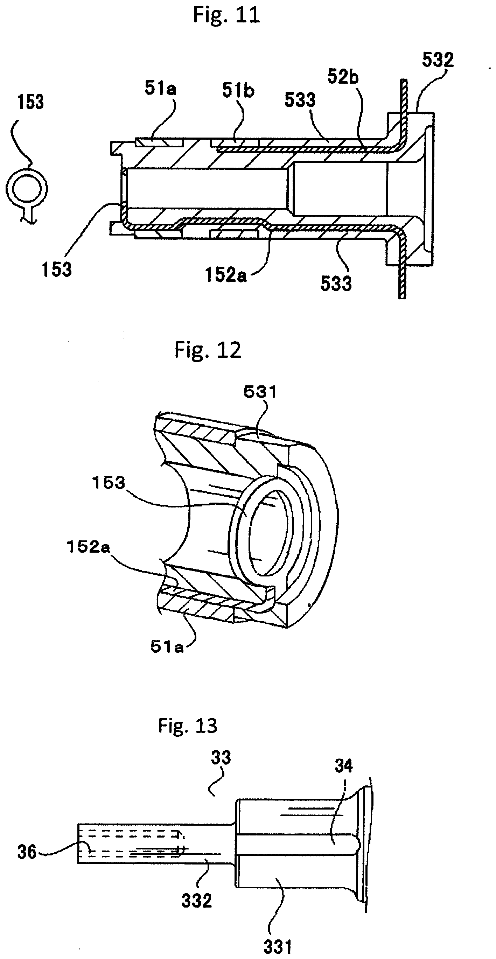

FIG. 9 is a front view showing a slip ring device 5 according to embodiment 2 of the present invention when attached to the brush-side shaft portion. FIG. 10 is a sectional view along B-B line in FIG. 9. FIG. 11 is a sectional view showing only the slip ring device 5 in FIG. 10 and a front view showing a protruding terminal portion 153. FIG. 12 is a sectional view showing a major part of the slip ring device 5. FIG. 13 is a side view showing the brush-side shaft portion 33.

In the present embodiment 2, an end of a connection conductor 152a connected to the negative-side slip ring 51a is formed to protrude toward the axis, thus forming the terminal portion 153 having a ring shape as shown in FIG. 12. When the connection conductor 152a having a plate shape is manufactured, the protruding terminal portion 153 is formed integrally therewith.

After the slip ring device 5 as described above is attached to the brush-side shaft portion 33, a screw 10 is inserted from the axial end side into a screw hole 36 of the brush-side shaft portion 33, and then tightened to fasten them. The other configuration is the same as in embodiment 1.

Thus, the protruding terminal portion 153 formed integrally with the connection conductor 152a is tightened to the shaft end portion so as to have close contact therewith, whereby the shaft 3 and the negative-side slip ring 51a connected to the connection conductor 152a can be electrically connected, and the electric charge accumulated in the shaft 3 and the pair of bearings 7 can be discharged to the housing through the brush-side shaft portion 33, the negative-side slip ring 51a, and the brush device 9. Therefore, electric corrosion of the bearings 7 and the like can be prevented.

The shape and the like of the protruding terminal portion 153 are not limited as long as electric connection with the shaft 3 can be ensured. In addition, since the protruding terminal portion 153 is embedded and held in the insulation molded body 53 integrally with the connection conductor 152a, as in embodiment 1, even when the rotor 2 is continuously rotating, the protruding terminal portion 153 can be kept in contact with the shaft 3.

### Embodiment 3

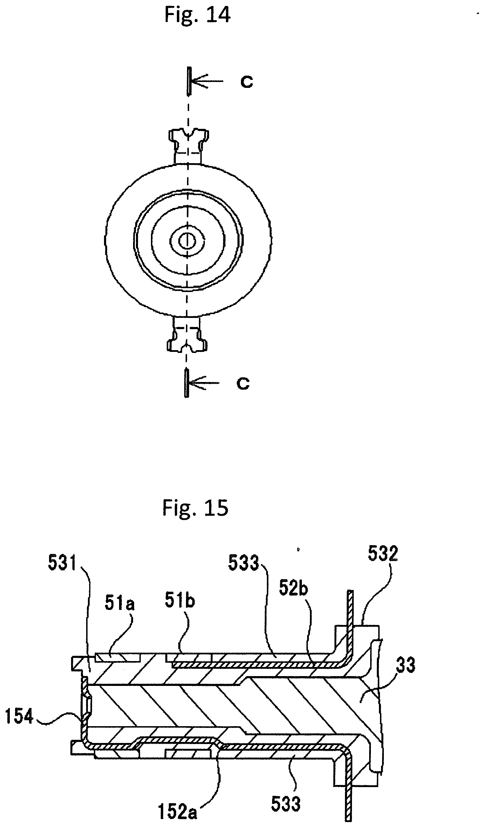

In embodiment 2, the protruding terminal portion 153 is brought into close contact with the end portion of the shaft 3 by tightening the screw 10. However, as shown in FIG. 14 and FIG. 15, it is also possible that the protruding terminal portion 153 is caulked to the end surface of the shaft 3, to form a caulking portion 154, whereby the protruding terminal portion 153 is mechanically joined to the brush-side shaft portion 33 and thus electrically connected therewith. In this case, as compared to embodiment 2, not only a screw component can be removed but also screw hole working for the shaft is not needed. Thus, the product can be obtained at low cost.

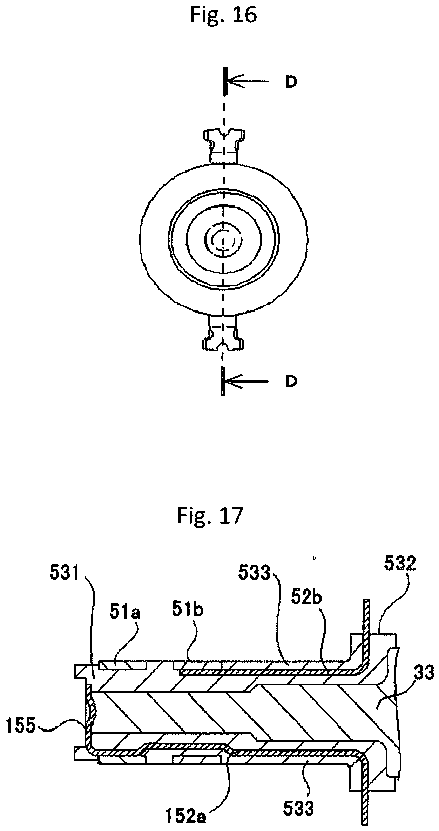

As shown in FIG. 16 and FIG. 17, it is also possible that the protruding terminal portion 153 is brought into close contact with the end portion of the shaft 3 by forming a welded portion 155 by welding. In this case, the fixation can be strengthened without the need of a caulking tool.

### Embodiment 4

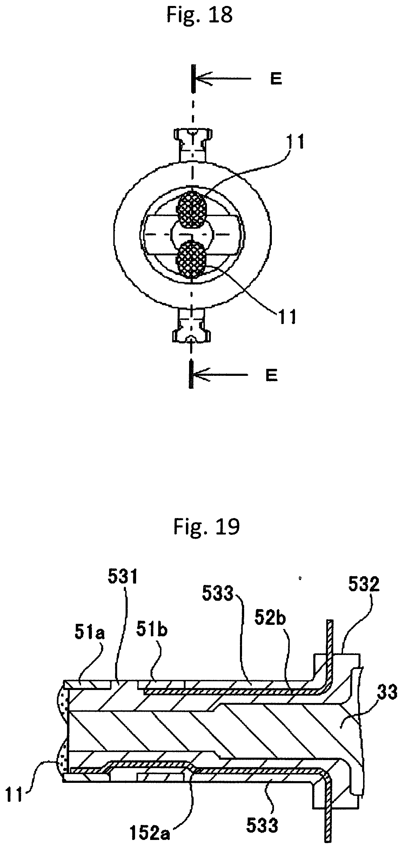

FIG. 18 is a front view showing a slip ring device according to embodiment 4 of the present invention when attached to the brush-side shaft portion. FIG. 19 is a sectional view along E-E line in FIG. 18.

In the present embodiment 4, at the end of the insulation molded body 53 in which the negative-side slip ring 51a is embedded, a recess is formed by cutting a part of the outer circumference thereof so that the axial end of the negative-side slip ring 51a is exposed by the recess. After the slip ring device 5 is fitted to the shaft 3, solder 11 is applied to the recess. The other configuration is the same as in the above embodiments.

Thus, by exposing a part of the connection conductor 152a and soldering the part with the shaft 3, the negative-side slip ring 51a can be electrically connected to the shaft 3.

In addition, as compared to the above embodiments, it is not necessary to newly design the protrusions 55 of the slip ring 51a and the protruding terminal portion 153, 154, 155 of the connection conductor 152a, and thus an effect of allowing the conventional slip ring 51a and connection conductor 152a to be directly used as they are.

Needless to say, the shape of the recess of the insulation molded body 53, arrangement of the solder 11, and the like can be selected as appropriate without limitation to the shown example.

Although in the above embodiments, a rotor of a vehicle AC generator has been described as an example, the present invention is applicable to various types of rotating electric machines, e.g., a rotor of an AC generator for outboard motor or a rotor of an AC generator motor.

Further, within the scope of the present invention, the above embodiments may be modified or simplified as appropriate.

## Claims

1. A rotor of a rotating electric machine, comprising:
a shaft (3) rotatable about an axis;
a rotor body (4) having a rotor coil (42) and fixed to the shaft (3);
a pulley (8) which is attached to one end of the shaft (3) and to which a drive force from an engine is transferred; and
a slip ring device (5) including a pair of slip rings (51a, 51b), a pair of connection conductors (52a, 52b) electrically connecting the respective slip rings (51a, 51b) and the rotor coil (42), and an insulation molded body (53) attached to another end of the shaft (3) and holding the slip rings (51a, 51b) and the connection conductors (52a, 52b), wherein
in the insulation molded body (53), the pair of slip rings (51a, 51b) and the pair of connection conductors (52a, 52b) are embedded and held such that brush sliding surfaces of the slip rings (51a, 51b) and lead-out-wire-connection end portions of the connection conductors (52a, 52b) are exposed in an outer circumferential direction,
wherein the negative-side slip ring (51a) embedded and held in the insulation molded body (53) has a protrusion (55) extending towards the shaft (3) and electrically connected to the shaft (3), **characterized in that**
the shaft (3) has a recess (35) formed in parallel with the axis and accommodating the protrusion (55) of the negative-side slip ring (51a), and fitting surfaces of the protrusion (55) and the recess (35) are formed to be flat surfaces.

2. The rotor of the rotating electric machine according to claim 1, wherein
the protrusion (55) of the negative-side slip ring (51a) is provided at such a position in a circumferential direction that a center of gravity is balanced on the axis together with the lead-out-wire-connection end portions of the pair of connection conductors (52a, 52b) as a whole.

3. A rotor of a rotating electric machine, comprising:
a shaft (3) rotatable about an axis;
a rotor body (4) having a rotor coil (42) and fixed to the shaft (3);
a pulley (8) which is attached to one end of the shaft (3) and to which a drive force from an engine is transferred; and
a slip ring device (5) including a pair of slip rings (51a, 51b), a pair of connection conductors (152a, 52b) electrically connecting the respective slip rings (51a, 51b) and the rotor coil (42), and an insulation molded body (53) attached to another end of the shaft (3) and holding the slip rings (51a, 51b) and the connection conductors (152a, 52b), wherein
in the insulation molded body (53), the pair of slip rings (51a, 51b) and the pair of connection conductors (152a, 52b) are embedded and held such that brush sliding surfaces of the slip rings (51a, 51b) and lead-out-wire-connection end portions of the connection conductors (152a, 52b) are exposed in an outer circumferential direction,
**characterized in that** the negative-side connection conductor (152a) embedded and held in the insulation molded body (53) has a protruding terminal portion (153) extending towards the shaft (3), the protruding terminal portion (153) is electrically connected to the shaft (3), and the protruding terminal portion (153) is screwed to a screw hole (36) provided in the axial end surface of the shaft (3) by a screw (10) that is inserted from the axial end side into the screw hole (36) of a brush-side shaft portion (33) .

4. A rotor of a rotating electric machine, comprising:
a shaft (3) rotatable about an axis;
a rotor body (4) having a rotor coil (42) and fixed to the shaft (3);
a pulley (8) which is attached to one end of the shaft (3) and to which a drive force from an engine is transferred; and
a slip ring device (5) including a pair of slip rings (51a, 51b), a pair of connection conductors (152a, 52b) electrically connecting the respective slip rings (51a, 51b) and the rotor coil (42), and an insulation molded body (53) attached to another end of the shaft (3) and holding the slip rings (51a, 51b) and the connection conductors (152a, 52b), wherein
in the insulation molded body (53), the pair of slip rings (51a, 51b) and the pair of connection conductors (152a, 52b) are embedded and held such that brush sliding surfaces of the slip rings (51a, 51b) and lead-out-wire-connection end portions of the connection conductors (152a, 52b) are exposed in an outer circumferential direction,
**characterized in that** the negative-side connection conductor (152a) embedded and held in the insulation molded body (53) has a protruding terminal portion (154, 155) extending towards the shaft (3), the protruding terminal portion (154, 155) is electrically connected to the shaft (3), and the protruding terminal portion (154, 155) is caulked or welded to the axial end surface of the shaft (3).

5. A rotor of a rotating electric machine, comprising:
a shaft (3) rotatable about an axis;
a rotor body (4) having a rotor coil (42) and fixed to the shaft (3);
a pulley (8) which is attached to one end of the shaft (3) and to which a drive force from an engine is transferred; and
a slip ring device (5) including a pair of slip rings (51a, 51b), a pair of connection conductors (152a, 52b) electrically connecting the respective slip rings (51a, 51b) and the rotor coil (42), and an insulation molded body (53) attached to another end of the shaft (3) and holding the slip rings (51a, 51b) and the connection conductors (152a, 52b), wherein
in the insulation molded body (53), the pair of slip rings (51a, 51b) and the pair of connection conductors (152a, 52b) are embedded and held such that brush sliding surfaces of the slip rings (51a, 51b) and lead-out-wire-connection end portions of the connection conductors (152a, 52b) are exposed in an outer circumferential direction,
**characterized in that** the insulation molded body (53) has a recess (35) formed at an axial end thereof, and at the recess (35), at least one of the negative-side slip ring (51a) and the negative-side connection conductor (152a) is soldered to the axial end surface of the shaft (3).

6. A rotating electric machine comprising the rotor of the rotating electric machine according to any one of claims 1 to 5, wherein
a waterproof structure is provided which is formed around the slip ring device (5) of the rotor (2).

## Patentansprüche

1. Rotor für eine rotierende elektrische Maschine, aufweisend:
eine Welle (3), die um eine Achse drehbar ist;
einen Rotorkörper (4) mit einer Rotorspule (42), der an der Welle (3) befestigt ist;
eine Riemenscheibe (8), die an einem Ende der Welle (3) angebracht ist und auf die eine Antriebskraft von einem Motor übertragen wird; und
eine Schleifringvorrichtung (5), die ein Paar von Schleifringen (51a, 51b), ein Paar von Verbindungsleitern (52a, 52b), die die jeweiligen Schleifringe (51a, 51b) und die Rotorspule (42) elektrisch verbinden, und einen Isolierformkörper (53), der an einem anderen Ende der Welle (3) angebracht ist und die Schleifringe (51a, 51b) und die Verbindungsleiter (52a, 52b) hält, aufweist, wobei
in dem Isolierformkörper (53) das Paar von Schleifringen (51a, 51b) und das Paar von Verbindungsleitern (52a, 52b) derart eingebettet und gehalten sind, dass Bürstengleitflächen der Schleifringe (51a, 51b) und Auslaufdrahtverbindungsendabschnitte der Verbindungsleiter (52a, 52b) in einer äußeren Umfangsrichtung freiliegen,
wobei der negativseitige Schleifring (51a), der in dem Isolierformkörper (53) eingebettet und gehalten ist, einen sich zur Welle (3) erstreckenden und mit der Welle (3) elektrisch verbundenen Vorsprung (55) aufweist,
**dadurch gekennzeichnet, dass**
die Welle (3) eine Aussparung (35) aufweist, die parallel zur Achse ausgebildet ist und den Vorsprung (55) des negativseitigen Schleifrings (51a) aufnimmt, und Passflächen des Vorsprungs (55) und der Aussparung (35) als flache Flächen ausgebildet sind.

2. Rotor für eine rotierende elektrische Maschine nach Anspruch 1, wobei
der Vorsprung (55) des negativseitigen Schleifrings (51a) an einer solchen Position in Umfangsrichtung vorgesehen ist, dass ein Schwerpunkt auf der Achse ausbalanciert ist, zusammen mit den Auslaufdrahtverbindungsendabschnitten des Paars von Verbindungsleitern (52a, 52b) als Ganzes.

3. Rotor für eine rotierende elektrische Maschine, aufweisend:
eine Welle (3), die um eine Achse drehbar ist;
einen Rotorkörper (4) mit einer Rotorspule (42), der an der Welle (3) befestigt ist;
eine Riemenscheibe (8), die an einem Ende der Welle (3) angebracht ist und auf die eine Antriebskraft von einem Motor übertragen wird; und
eine Schleifringvorrichtung (5), die ein Paar von Schleifringen (51a, 51b), ein Paar von Verbindungsleitern (152a, 52b), die die jeweiligen Schleifringe (51a, 51b) und die Rotorspule (42) elektrisch verbinden, und einen Isolierformkörper (53), der an einem anderen Ende der Welle (3) angebracht ist und die Schleifringe (51a, 51b) und die Verbindungsleiter (152a, 52b) hält, aufweist, wobei
in dem Isolierformkörper (53) das Paar von Schleifringen (51a, 51b) und das Paar von Verbindungsleitern (152a, 52b) derart eingebettet und gehalten sind, dass Bürstengleitflächen der Schleifringe (51a, 51b) und Auslaufdrahtverbindungsendabschnitte der Verbindungsleiter (152a, 52b) in einer äußeren Umfangsrichtung freiliegen,
**dadurch gekennzeichnet, dass** der in dem Isolierformkörper (53) eingebettete und gehaltene negativseitige Verbindungsleiter (152a) einen sich zur Welle (3) erstreckenden vorstehenden Anschlussabschnitt (153) aufweist, wobei der vorstehende Anschlussabschnitt (153) mit der Welle (3) elektrisch verbunden ist, und wobei der vorstehende Anschlussabschnitt (153) in ein in der axialen Endfläche der Welle (3) vorgesehenes Schraubenloch (36) mit einer Schraube (10), die von der axialen Endseite her in das Schraubenloch (36) eines bürstenseitigen Wellenabschnitts (33) eingeführt ist, geschraubt ist.

4. Rotor für eine rotierende elektrische Maschine, aufweisend:
eine Welle (3), die um eine Achse drehbar ist;
einen Rotorkörper (4) mit einer Rotorspule (42), der an der Welle (3) befestigt ist;
eine Riemenscheibe (8), die an einem Ende der Welle (3) angebracht ist und auf die eine Antriebskraft von einem Motor übertragen wird; und
eine Schleifringvorrichtung (5), die ein Paar von Schleifringen (51a, 51b), ein Paar von Verbindungsleitern (152a, 52b), die die jeweiligen Schleifringe (51a, 51b) und die Rotorspule (42) elektrisch verbinden, und einen Isolierformkörper (53), der an einem anderen Ende der Welle (3) angebracht ist und die Schleifringe (51a, 51b) und die Verbindungsleiter (152a, 52b) hält, aufweist, wobei
in dem Isolierformkörper (53) das Paar von Schleifringen (51a, 51b) und das Paar von Verbindungsleitern (152a, 52b) derart eingebettet und gehalten sind, dass Bürstengleitflächen der Schleifringe (51a, 51b) und Auslaufdrahtverbindungsendabschnitte der Verbindungsleiter (152a, 52b) in einer äußeren Umfangsrichtung freiliegen,
**dadurch gekennzeichnet, dass** der in dem Isolierformkörper (53) eingebettete und gehaltene negativseitige Verbindungsleiter (152a) einen sich zur Welle (3) erstreckenden vorstehenden Anschlussabschnitt (154, 155) aufweist, wobei der vorstehende Anschlussabschnitt (154, 155) mit der Welle (3) elektrisch verbunden ist, und wobei der vorstehende Anschlussabschnitt (154, 155) mit der axialen Endfläche der Welle (3) verstemmt oder verschweißt ist.

5. Rotor für eine rotierende elektrische Maschine, aufweisend:
eine Welle (3), die um eine Achse drehbar ist;
einen Rotorkörper (4) mit einer Rotorspule (42), der an der Welle (3) befestigt ist;
eine Riemenscheibe (8), die an einem Ende der Welle (3) angebracht ist und auf die eine Antriebskraft von einem Motor übertragen wird; und
eine Schleifringvorrichtung (5), die ein Paar von Schleifringen (51a, 51b), ein Paar von Verbindungsleitern (152a, 52b), die die jeweiligen Schleifringe (51a, 51b) und die Rotorspule (42) elektrisch verbinden, und einen Isolierformkörper (53), der an einem anderen Ende der Welle (3) angebracht ist und die Schleifringe (51a, 51b) und die Verbindungsleiter (152a, 52b) hält, aufweist, wobei
in dem Isolierformkörper (53) das Paar von Schleifringen (51a, 51b) und das Paar von Verbindungsleitern (152a, 52b) derart eingebettet und gehalten sind, dass Bürstengleitflächen der Schleifringe (51a, 51b) und Auslaufdrahtverbindungsendabschnitte der Verbindungsleiter (152a, 52b) in einer äußeren Umfangsrichtung freiliegen,
**dadurch gekennzeichnet, dass** der Isolierformkörper (53) eine Aussparung (35) aufweist, die an einem axialen Ende davon ausgebildet ist, und wobei an der Aussparung (35) der negativseitige Schleifring (51a) und/oder der negativseitige Verbindungsleiter (152a) an die axiale Endfläche der Welle (3) gelötet ist.

6. Rotierende elektrische Maschine, die den Rotor für eine rotierende elektrische Maschine nach einem der Ansprüche 1 bis 5 aufweist, wobei
eine wasserdichte Struktur vorgesehen ist, die um die Schleifringvorrichtung (5) des Rotors (2) herum ausgebildet ist.

## Revendications

1. Rotor d'une machine électrique tournante comprenant :
un arbre (3) qui peut tourner autour d'un axe ;
un corps de rotor (4) présentant une bobine de rotor (42) et fixé à l'arbre (3) ;
une poulie (8) qui est fixée à une extrémité de l'arbre (3) et à laquelle une force d'entraînement venant d'un moteur est transférée ; et
un dispositif à bagues collectrices (5) incluant une paire de bagues collectrices (51a, 51b), une paire de conducteurs de connexion (52a, 52b) connectant électriquement les bagues collectrices respectives (51a, 51b) et la bobine de rotor (42) et un corps d'isolation moulé (53) fixé à une autre extrémité de l'arbre (3) et contenant les bagues collectrices (51a, 51b) et les conducteurs de connexion (52a, 52b), dans lequel :
dans le corps d'isolation moulé (53), la paire de bagues collectrices (51a, 51b) et la paire de conducteurs de connexion (52a, 52b) sont noyées et maintenues de sorte que les surfaces de coulissement des balais des bagues collectrices (51a, 51b) et des parties d'extrémité de connexions de câbles de sortie des conducteurs de connexion (52a, 52b) soient exposées dans une direction circonférentielle externe,
dans lequel la bague collectrice côté négatif (51a) noyée et maintenue dans le corps moulé d'isolation (53) présente une saillie (55) s'étendant vers l'arbre (3) et connectée électriquement à l'arbre (3), **caractérisé en ce que** :
l'arbre (3) présente une cavité (35) formée en parallèle avec l'axe et recevant la saillie (55) de la bague collectrice côté négatif (51a) et les surfaces de montage de la saillie (55) et de la cavité (35) sont formées pour être des surfaces plates.

2. Rotor de la machine électrique tournante selon la revendication 1, dans lequel :
la saillie (55) de la bague collectrice côté négatif (51a) est disposée dans une position telle qu'un centre de gravité soit équilibré sur l'axe conjointement avec les parties d'extrémité de connexions des câbles de sortie de la paire de conducteurs de connexion (52a, 52b) dans leur ensemble.

3. Rotor d'une machine électrique tournante, comprenant :
un arbre (3) qui peut tourner autour d'un axe ;
un corps de rotor (4) présentant une bobine de rotor (42) et fixé à l'arbre (3) ;
une poulie (8) qui est fixée à une extrémité de l'arbre (3) et à laquelle une force d'entraînement venant d'un moteur est transférée ; et
un dispositif à bagues collectrices (5) incluant une paire de bagues collectrices (51a, 51b), une paire de conducteurs de connexion (152a, 52b) connectant électriquement les bagues collectrices respectives (51a, 51b) et la bobine de rotor (42) et un corps d'isolation moulé (53) fixé à une autre extrémité de l'arbre (3) et maintenant les bagues collectrices (51a, 51b) et les conducteurs de connexion (152a, 52b), dans lequel :
dans le corps d'isolation moulé (53), la paire de bagues collectrices (51a, 51b) et la paire de conducteurs de connexion (152a, 52b) sont noyées et maintenues de sorte que les surfaces de coulissement des balais des bagues collectrices (51a, 51b) et des parties d'extrémité de connexions de câbles de sortie (152a, 52b) soient exposées dans une direction circonférentielle externe,
**caractérisé en ce que** le conducteur de connexion côté négatif (152a) noyé et maintenu dans le corps d'isolation moulé (53) présente une partie terminale saillante (153) s'étendant vers l'arbre (3), la partie terminale saillante (153) est connectée électriquement à l'arbre (3) et la partie terminale saillante (153) est vissée dans un trou de vissage (36) ménagé dans la surface d'extrémité axiale de l'arbre (3) par une vis (10) qui est insérée depuis le côté d'extrémité axial dans le trou de vissage (36) d'une partie d'arbre côté balais (33).

4. Rotor d'une machine électrique tournante, comprenant :
un arbre (3) qui peut tourner autour d'un axe ;
un corps de rotor (4) présentant une bobine de rotor (42) et fixé à l'arbre (3) ;
une poulie (8) qui est fixée à une extrémité de l'arbre (3) et à laquelle une force d'entraînement venant d'un moteur est transférée ; et
un dispositif à bagues collectrices (5) incluant une paire de bagues collectrices (51a, 51b), une paire de conducteurs de connexion (152a, 52b) connectant électriquement les bagues collectrices respectives (51a, 51b) et la bobine de rotor (42) et un corps d'isolation moulé (53) fixé à une autre extrémité de l'arbre (3) et contenant les bagues collectrices (51a, 51b) et les conducteurs de connexion (152a, 52b), dans lequel :
dans le corps d'isolation moulé (53), la paire de bagues collectrices (51a, 51b) et la paire de conducteurs de connexion (152a, 52b) sont noyées et maintenues de sorte que les surfaces de coulissement des balais des bagues collectrices (51a, 51b) et des parties d'extrémité de connexions de câbles de sortie des conducteurs de connexion (152a, 52b) soient exposées dans une direction circonférentielle externe,
**caractérisé en ce que** le conducteur de connexion côté négatif (152a) noyé et maintenu dans le corps d'isolation moulé (53) présente une partie terminale saillante (154, 155) s'étendant vers l'arbre (3), la partie terminale saillante (154, 155) est connectée électriquement à l'arbre (3) et la partie terminale saillante (154, 155) est matée ou soudée à la surface d'extrémité axiale de l'arbre (3).

5. Rotor d'une machine électrique tournante comprenant :
un arbre (3) qui peut tourner autour d'un axe ;
un corps de rotor (4) présentant une bobine de rotor (42) et fixé à l'arbre (3) ;
une poulie (8) qui est fixée à une extrémité de l'arbre (3) et à laquelle une force d'entraînement venant d'un moteur est transférée ; et
un dispositif à bagues collectrices (5) incluant une paire de bagues collectrices (51a, 51b), une paire de conducteurs de connexion (152a, 52b) connectant électriquement les bagues collectrices respectives (51a, 51b) et la bobine de rotor (42) et un corps d'isolation moulé (53) fixé à une autre extrémité de l'arbre (3) et maintenant les bagues collectrices (51a, 51b) et les conducteurs de connexion (152a, 52b), dans lequel :
dans le corps d'isolation moulé (53), la paire de bagues collectrices (51a, 51b) et la paire de conducteurs de connexion (152a, 52b) sont noyées et maintenues de sorte que les surfaces de coulissement des balais des bagues collectrices (51a, 51b) et des parties d'extrémité de connexions de câbles de sortie des conducteurs de connexion (152a, 52b) soient exposées dans une direction circonférentielle externe,
**caractérisé en ce que** le corps d'isolation moulé (53) présente une cavité (35) formée à son extrémité axiale et, dans la cavité (35), au moins l'un(e) de la bague collectrice côté négatif (51a) et du conducteur de connexion côté négatif (152a) est brasé(e) à la surface d'extrémité axiale de l'arbre (3).

6. Machine électrique tournante comprenant le rotor de la machine électrique tournante selon l'une quelconque des revendications 1 à 5, dans laquelle :
il est aménagé une structure imperméable qui est formée autour du dispositif à bagues collectrices (5) du rotor (2).
